# EUROPÄISCHE PATENTANMELDUNG

(11) **EP 1 018 453 A2**
(43) Veröffentlichungstag der Anmeldung: **12.07.2000**
(21) Anmeldenummer: 00100456.3
(22) Anmeldetag: 10.01.2000
(51) Int. Cl.: B60Q 1/30

(54) **Sicherheitseinrichtung für ein Fahrzeug mit Anhänger**

(30) Priorität: 10.01.1999 DE 19900533; 10.01.1999 DE 19900531; 04.11.1999 DE 19953245
(71) Anmelder: Steffen, Uwe, 53937 Schleiden (DE); Flink, Michael, 53881 Euskirchen (DE)
(72) Erfinder: Steffen, Uwe, 53937 Schleiden (DE); Flink, Michael, 53881 Euskirchen (DE)
(74) Vertreter: Castell, Klaus, Dr.

(57) **Zusammenfassung**

Es wird vorgeschlagen, an Fahrzeugen die mit einem Anhänger verbunden sind, eine Sicherheitseinrichtung anzubringen. Im Falle eines unbeabsichtigten Abkoppelns des Anhängers vom Zugfahrzeug werden die am Anhänger vorhandene Leuchtmittel für die Sicherheitseinrichtung aktiviert.

## Beschreibung

Die Erfindung betrifft eine Sicherheitseinrichtung für Fahrzeuge mit Anhänger, bei welchem an dem Hänger eine Warnblickanlage eingeschaltet wird, wenn der Anhänger von einem Zugfahrzeug getrennt wird.

Im täglichen Verkehrsbetrieb können sich die mit Zugmaschinen verbundenen Anhänger unbeabsichtigt lösen. Als Folge können die von den Stromnetzen der Zugmaschinen getrennten Anhänger ein gefährliches Hindernis darstellen. Insbesondere ist diese Situation während der Dämmerung bzw. bei Dunkelheit oder auch bei erschwerten Sichtverhältnissen, wie Nebel oder Schnee, eine potentielle Gefahrenquelle. In der DE 197 24 342 C2 wird eine Vorrichtung für ein Anhängerfahrzeug beschrieben, das mit einer elektrischen Beleuchtungsanlage versehen ist, die das Zugfahrzeug über eine Stecker/Steckdosenanordung elektrisch miteinander verbindet. Im Falle eines unkontrollierten Abkoppelns des Hängers wird eine Blinkerwarnung über jeweils an den Eckpunkten des Hängers zusätzlich installierten Warnleuchten signalisiert. Die eigens hierzu in dem Hänger angeordnete Batterie speist die zum Betreiben der Warneinrichtung notwendige Energie in das Kabelnetz des Hängers ein. Um zu verhindern, daß die Blinkerwarnung bei einem gewollten Lösen von der Zugmaschine eingeschaltet wird, ist eine Steckeraufhahme vorgesehen, die mit einem Unterbrecher ausgerüstet ist und bei einem ordnungsgemäßen Abkupplungsvorgang das Einschalten der Warneinrichtung verhindert.

Es ist Aufgabe der Erfindung, eine im Aufbau einfache und dadurch preislich und damit wirtschaftlich attraktive Sicherheitseinrichtung für Fahrzeuge mit Anhänger bereitzustellen.

Als Lösung schlägt die Erfindung vor, daß eine beim Trennen eingeschaltete Warnblinkanlage ohnehin am Anhänger vorhandene Blinkerleuchten, Positionsleuchten und/oder Rückleuchten umfaßt. Durch die Verwendung einer bereits am Anhänger installierten Beleuchtungseinrichtung ist der Installationsaufwand auf ein Minimum reduziert, da das bereits verlegte Kabelnetz sowie die vorhandenen Blinker, Positions- und Rückleuchten genutzt werden können. Durch die Benutzung der vorhandenen Installation wird eine hohe Betriebssicherheit der Sicherheitseinrichtung erreicht, da die im Fahrzeug- bzw. im Anhängerbau verwendeten Bauteile einen nachweißbar hohen Qualitätsstandard aufweisen. Nicht zu vergessen ist der minimale Aufwand bezüglich der Genehmigungsfähigkeit der Sicherheitseinrichtung, da Prüfverfahren bezüglich der Leuchtenart sowie der Installationsorte der Leuchten entfallen können.

Es wird vorgeschlagen, daß die erfindungsgemäße Sicherheitseinrichtung einen Zwischenadapter umfaßt, in welchem ein elektrisches Anschlußkabel des Anhängers einsteckbar ist und welcher seinerseits einen elektrischen Anschluß zur Verbindung mit dem Zugfahrzeug aufweist. Hierbei umfaßt der Zwischenadapter eine Spannungsquelle, Mittel zum Überprüfen der elektrischen Verbindung zum Zugfahrzeug sowie Mittel zum Betätigen der Warnblinkanlage des Anhängers, wobei diese Überprüfungsmittel ein Abtrennen der Verbindung feststellen und dann die Warnblinkanlage einschalten. Der Vorteil dieser Ausführung ist in der einfachen Installation zu sehen, da sich ein Installationsaufwand lediglich an der Übergangsstelle der Standardverkabelung des Anhängers in den Zwischenadapter und von dem Zwischenadapter zur Zugmaschine ergibt. Die Gefahr von Schaltungsfehlern sind hierdurch reduziert, da auf bereits vorhandene Einrichtungen zurückgegriffen werden kann.

Der Zwischenadapter kann fest mit dem Anhänger verbunden und über Kabel elektrisch mit einem Zugfahrzeug verbindbar bzw. anschließbar sein. Hierbei sollte die Standardverkabelung des Anhängers möglichst geschützt angebracht sein und nicht frei liegen, da diese sonst leicht durchtrennt werden kann. Ist jedoch ein Durchtrennen des Zwischenadapterkabels aufgetreten, ist dieses unkritisch, da diese Situation gerade die Sicherheitseinrichtung aktiviert.

Es wird vorgeschlagen, daß die Sicherheitseinrichtung, insbesondere der Zwischenadapter der Sicherheitseinrichtung, für einen Betrieb zwischen 5 V und 50 V ausgelegt ist. Durch die Wahl geeigneter Elektronikbauteile kann diese Variabilität der Spannungen gewährleistet werden. Ein weitgespreitzter Anwendungsbereich, der sowohl den Nutzfahrzeugbereich wie auch den PKW-Bereich umfaßt, kann hierdurch abgedeckt werden. Sollten die zur Zeit im Fahrzeugbau standardmäßig verwendeten Betriebsnetzspannungen geändert werden, ist durch eine derartige Ausgestaltung eine Nachrüstungsmöglichkeit auch bei anderen Spannungen als beispielsweise 12 V ermöglicht.

Die Sicherheitseinrichtung kann ein elektronisches Relais aufweisen. Ein derartiges elektronisches Relais weist nicht nur stromsparende Eigenschaften auf, sondern es können auch verschiedene Blinkfrequenzen erzeugt werden, die je nach Wunsch schneller oder langsamer zur Differenzierung des Signals dargestellt werden können. Weiterhin beinhaltet der Einsatz des vorgeschlagenen Relais auch die Option, anstelle der verwendeten Glühlampen Leuchtdioden einzusetzen, da diese besonders gut durch das elektronische Relais angesteuert werden können.

Es wird vorgeschlagen, daß die erfmdungsgemäße Sicherheitseinrichtung durch eine eigene Spannungsquelle, die über eine Blinkelektrik mit den Blinkleuchten, den Rückleuchten und/oder den Positionsleuchten des Anhängers verbunden ist, arbeitet. Dadurch kann bei einem Ausfall der Fahrzeugbatterie über das der Sicherheitseinrichtung zugehörige Stromnetz eine Aktivierung aller mit ihr verbundenen Leuchten, auch beim Fahrzeug selbst, als ein optischer Alarm hinsichtlich einer Gefahrensituation erfolgen.

Eine Ausführungsform der Sicherheitseinrichtung sieht vor, daß die beim Trennen eingeschaltete Warnblinkanlage über Zeitschaltmittel nach einem einstellbaren Zeitintervall ausschaltet. Ist dann beispielsweise ein Schaden am Fahrzeug behoben und tritt gleich darauf wieder auf, ist die Zusatzbatterie oder ähnliches nicht entladen.

Um zu erreichen, daß die beim Trennen des Anhängers eingeschaltete Warnblinkanlage bei Rangiertätigkeiten oder ähnlichem nicht blinkt, können Mittel zum Ausschalten der Sicherheitseinrichtung vorhanden sein.

Es wird vorgeschlagen, daß die Ausschaltmittel die Sicherheitseinrichtung in einem "Stand-By"-Modus versetzen und die Sicherheitseinrichtung beim Schließen der elektrischen Verbindung zwischen Zugfahrzeug und Anhänger automatisch aus diesem "Stand-By"-Modus aktiviert wird. Somit ist das Einschalten der Sicherheitseinrichtung bei einem erneuten Ankoppeln eines Anhängers an eine Zugmaschine automatisiert und kann nicht vergessen werden.

Weitere Vorteile, Ziele und Eigenschaften vorliegender Erfindung werden anhand nachfolgender Beschreibung anliegender Zeichnung erläutert, in welcher eine schematische Draufsicht eines Anhängers mit einer erfindungsgemäßen Sicherheitseinrichtung dargestellt ist.

Wird der an einem Ende des Kabels 11 vorhandene Stecker 12 aus einer hier nicht dargestellten Steckdose, die ihrerseits an einer hier nicht dargestellten Zugmaschine angeordnet ist, durch eine äußere Krafteinwirkung unbeabsichtigt herausgezogen, erfolgt das Einschalten der Sicherheitseinrichtung über den Zwischenadapter 13 und der Standardverkabelung 14 in Form von Blinkzeichen über die Blinkleuchten 3, 7, die Rückleuchten 4, 8, die Bremsleuchten 5, 9 sowie über die Positionsleuchten 10.

Durch die Verwendung der bereits am Anhänger 1 installierten Beleuchtungseinrichtung ist der Installationsaufwand auf ein Minimum reduziert, da das bereits verlegte Kabelnetz 14 und die vorhandenen Blinker 3, 7, die Rückleuchte 4, 8, die Bremsleuchte 5, 9 sowie die Positionsleuchten 10 genutzt werden. Hierdurch wird eine hohe Betriebssicherheit erreicht, da die im Fahrzeug- bzw. im Anhängerbau verwendeten Bauteile einen geprüften Qualitätsstandard aufweisen. Weiterhin ergibt sich minimaler Aufwand bezüglich der Genehmigungsfähigkeit der Einrichtung, da Prüfverfahren, die die Leuchtenart und den Montageort der Leuchten kontrollieren, entfallen können.

In vorligendem Zusammenhang ist insbesondere die Verwendung der Rückleuchten 4, 8 vorteilhaft, da diese mit den Positionsleuchten in der Regel parallel bzw. in Reihe geschaltet sind und somit gleichzeitig auch die Positionsleuchten 10 Bestandteil der erfindungsgemäßen Sicherheitseinrichtung sind. Insofern braucht lediglich die für die Rückleuchten 4, 8 vorgesehene, am Anhänger ohnehin vorhandene Anschlußleitung entsprechend als Warnlicht beschaltet werden, um auch einen querstehenden Anhänger ausreichend zu sichern.

Die vorhandene Anhängerverkabelung 14 wird über eine zu eine Standardverkabelung passende Steckerverbindung an den Zwischenadapter 13 angeschlossen. Der Zwischenadapter 13 ist ausgangsseitig mit einer Verbindung 11 ausgestattet, an deren Ende über den Stecker 12 der elektrische Anschluß zu einem Zugfahrzeug geschaffen wird. Der Zwischenadapter 13 weist eine Spannungsquelle, Mittel zum Überprüfen der elektrischen Verbindung zum Zugfahrzeug, sowie Mittel zum Betätigen der Warnblinkanlage auf. Stellen die Mittel zur Überprüfung der elektrischen Verbindung fest, daß eine Trennung stattgefunden hat, wird mittels des Zwischenadapters 13 die Warnblinkanlage aktiviert. Der zusätzlich notwendige Montageaufwand zum Anbringen der Sicherheitseinrichtung ist minimal, da nur der Zwischenadapter 13 anzubringen ist.

Der Zwischenadapter 13 ist fest mit dem Anhänger 1 verbunden. Die Leitung 11 ist ohne durchzuhängen um die Deichsel 15 geführt, da dieses die Möglichkeit einer Beschädigung der Leitung 11 minimiert. Die Standardverkabelung 14 ist nach Möglichkeit derart gelagert, daß ein äußerer Einfluß, wie ein unbeabsichtigtes Herabhängen, nahezu ausgeschlossen ist. Tritt hingegen eine Beschädigung der Verbindung 11 auf, ist dieses unkritisch, da gerade diese Situation die Sicherheitseinrichtung aktiviert.

Der Zwischenadapter 13 ist für einen Betrieb zwischen 5 V und 50 V ausgelegt, wodurch eine Variabilität bezüglich verschiedenster Spannungen gewährleistet ist. Ein weitgespreiztes Anwendungsgebiet, welches sowohl den Nutzfahrzeug als auch den PKW-Bereich umfaßt, kann dadurch abgedeckt werden. Im Falle einer Nachrüstung ist durch die beschriebene Spannungsvariabilität selbst bei einer Änderung einer standardmäßig verwendeten Betriebsnetzspannung die Anwendung der erfindungsgemäßen Sicherheitseinrichtung ermöglicht.

Der schematisch dargestellte Zwischenadapter 13 ist mit hier nicht näher dargestellten elektronischen Relais ausgestattet. Die Verwendung des elektronischen Relais anstelle der standardmäßig vorhandenen Blinkerrelais ermöglicht die Darstellung verschiedenster Blinkfrequenzen. Eine weitere Besonderheit ist das gute Zusammenwirken einer elektronischen Relais mit Leuchtioden, die anstelle der Glühlampen oder auch miteinander in Kombination eingesetzt werden können.

Durch eine hier nicht dargestellte zusätzliche Spannungsquelle werden der erfmdungsgemäße Zwischenadapter 13 und die Blinkleuchten 3, 7, die Rückleuchten 4, 8, die Bremsleuchten 5, 9 sowie die Positionsleuchten 10 mit Energie versorgt, sodaß bei einem Ausfall der Fahrzeugbatterie über das vorhandene Stromnetz, auch beim Fahrzeug selbst, eine optische Alarmierung einer Gefahrensituation sicher gestellt ist.

Wird der Stecker 12 aus der Steckdose des Zugfahrzeugs herausgezogen, wird, wie bereits beschrieben, die Sicherheitseinrichtung aktiviert, und die Warnblinkanlage leuchtet.

Bei Rangierarbeiten, die mit einem vom Zugfahrzeug getrennten Anhänger 1 durchgeführt werden, kann die über Mittel zum Ausschalten verfügende Sicherheitseinrichtung so geschaltet werden, daß die Rückleuchteneinheiten 2, 6 sowie die Positionsleuchten 10 nicht über die Warnblinkanlage zum Blinken gebracht werden.

Die Sicherheitseinrichtung kann über die Ausschaltmittel in einen "Stand-By"-Modus geschaltet werden. Im "Stand-By"-Modus wird beim Schließen der elektrischen Verbindung über die Leitung 11 bzw. dem Einstecken des Steckers 12 in eine Zugmaschine automatisch der "Stand-By"-Modus aufgehoben, und die Sicherheitseinrichtung ist wieder aktiviert.

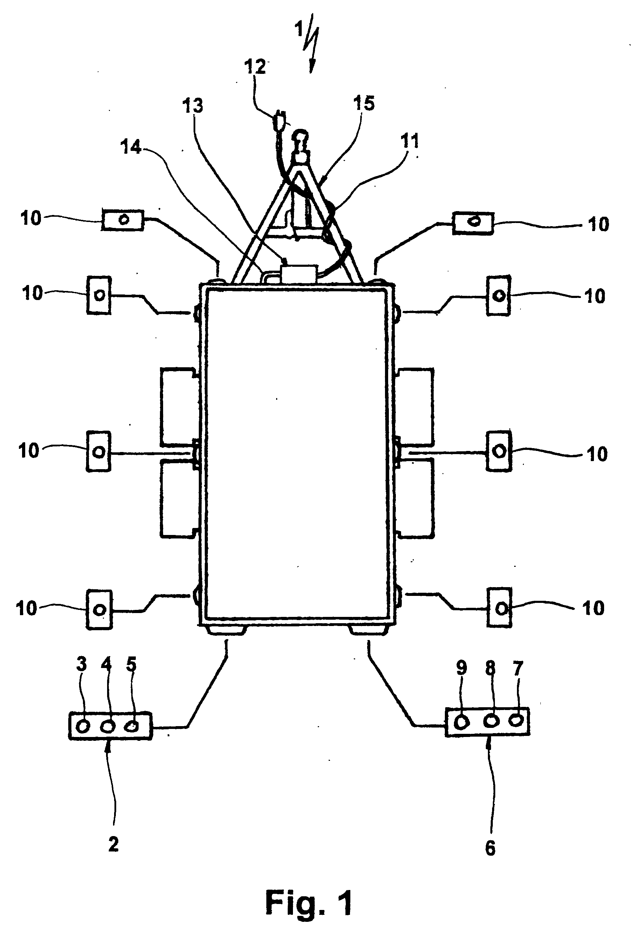

## Patentansprüche

1. Sicherheitseinrichtung für Fahrzeuge mit Anhänger, bei welcher an dem Anhänger (1) eine Warnblinkanlage eingeschaltet wird, wenn der Anhänger (1) von einem Zugfahrzeug getrennt wird, ***dadurch gekennzeichnet, daß*** die beim Trennen eingeschaltete Warnblinkanlage ohnehin am Anhänger (1) vorhandene Blinkerleuchten (3, 7), Positionsleuchten (10) und/oder Rückleuchten (4, 8) umfaßt.

2. Sicherheitseinrichtung nach Anspruch 1, ***gekennzeichnet durch*** einen Zwischenadapter (13), in welchen ein elektrisches Anschlußkabel (14) des Anhängers (1) einsteckbar ist und welcher seinerseits einen elektrischen Anschluß (11, 12) zur Verbindung mit dem Zugfahrzeug aufweist, wobei der Zwischenadapter (13) eine Spannungsquelle, Mittel zum Überprüfen der elektrischen Verbindung zum Zugfahrzeug sowie Mittel zum Betätigen der Warnblinkanlage des Anhängers (1) umfaßt, wenn die Überprüfungsmittel ein Abtrennen der Verbindung (11, 12) feststellen.

3. Sicherheitseinrichtung nach dem Anspruch 2, ***dadurch gekennzeichnet, daß*** der Zwischenadapter (13) fest mit dem Anhänger (1) verbunden und über ein Kabel (11, 12) elektrisch mit einem Zugfahrzeug verbindbar ist.

4. Sicherheitseinrichtung nach einem der vorhergehenden Ansprüche, ***dadurch gekennzeichnet, daß*** die Sicherheitseinrichtung, insbesondere ein Zwischenadapter (13) der Sicherheitseinrichtung, für einen Betrieb zwischen 5 V und 50 V ausgelegt ist.

5. Sicherheitseinrichtung nach einem der vorhergehenden Ansprüche, ***dadurch gekennzeichnet, daß*** die Sicherheitseinrichtung, insbesondere ein Zwischenadapter (13) der Sicherheitseinrichtung, wenigstens ein elektronisches Relais aufweist.

6. Sicherheitseinrichtung nach einem der vorhergehenden Ansprüche, ***gekennzeichnet durch*** eine Spannungsquelle die über eine Blinkelektronik mit den Blinkleuchten (3, 7), den Rückleuchten (4, 8) und/oder den Positionsleuchten (10) des Anhängers (1) verbunden ist.

7. Sicherheitseinrichtung nach einem der vorhergehenden Ansprüchen, ***gekennzeichnet durch*** Zeitschaltmittel, welche die beim Trennen eingeschaltete Warnblinkanlage nach einem einstellbarem Zeitintervall ausschalten.

8. Sicherheitseinrichtung nach einem der vorhergehenden Ansprüche, ***gekennzeichnet durch*** Mittel zum Ausschalten der beim Trennen eingeschalteten Warnblinkanlage.

9. Sicherheitseinrichtung nach Anspruch 8, ***dadurch gekennzeichnet, daß*** die Ausschaltmittel die Sicherheitseinrichtung in einen "Stand-By"-Modus versetzen und die Sicherheitseinrichtung beim Schließen der elektrischen Verbindung (11, 12) zwischen Zugfahrzeug und Anhänger (1) automatisch aus diesem "Stand-By"-Modus aktiviert wird.
